(19) Europäisches Patentamt
European Patent Office
Office européen des brevets

(11) Numéro de publication : **0 173 588 B2**

# (12) NOUVEAU FASCICULE DE BREVET EUROPEEN

(45) Date de publication du nouveau fascicule du brevet : **17.08.94 Bulletin 94/33**

(21) Numéro de dépôt : **85401230.9**

(22) Date de dépôt : **20.06.85**

(51) Int. Cl.[5] : **C01B 6/24,** H01F 1/04, C22C 19/07, C22C 38/00

## (54) Nouveaux hydrures de terre rare/fer/bore et terre rare/cobalt/bore magnétiques, leur procédé de fabrication et de fabrication des produits déshydrurés pulvérulents correspondants, leurs applications.

(30) Priorité : **29.06.84 FR 8410387**

(43) Date de publication de la demande : **05.03.86 Bulletin 86/10**

(45) Mention de la délivrance du brevet : **24.08.88 Bulletin 88/34**

(45) Mention de la décision concernant l'opposition : **17.08.94 Bulletin 94/33**

(84) Etats contractants désignés : **DE GB IT NL**

(56) Documents cités :
**EP-A- 0 126 179**
**EP-A- 0 303 054**
**GB-A- 1 313 272**
**GB-A- 1 554 384**
**Rep. Prog. Phys. vol. 45 (1982), pages 937-1011**
**Science vol. 223, 2.3.1984, pages 920-922**
**Journal of the Less-Common Metals, 158 (1990), pages 359-365**
**Acta Metall. vol. 35 No. 10 (1987), pages 2465-2470**
**Solid State Communications, vol. 40 (1981), pages 117-120**
**Phys. Rev. B29, 4176, 01.04.1984**
**Journal of the Less-Common Metals, 101, (1984), pages 145-168**
**Handbook on the Physics and Chemistry of Rare Earths, K.A.Gschneider et al., vol. 6, 1984, pages 188, 229, 230**
**Journal of Solid State Chemistry, vol. 47, 1983, pages 41-46**

(73) Titulaire : **CENTRE NATIONAL DE LA RECHERCHE SCIENTIFIQUE (CNRS)
3, rue Michel Ange
F-75016 Paris (FR)**

(72) Inventeur : **Fruchart, Robert
9, Chemin des Oiseaux
F-38700 La Tronche (FR)**
Inventeur : **Madar, Roland
11, Allée des Sicelles
F-38320 Eybens (FR)**
Inventeur : **Rouault, Alain
9, rue du Rachais
Poisat
F-38320 Eybens (FR)**
Inventeur : **L'Heritier, Philippe
6, Allée des Coquelicots
Poisat
F-38320 Eybens (FR)**
Inventeur : **Taunier, Pierre
14, rue Anthoard
F-38000 Grenoble (FR)**
Inventeur : **Boursier, Daniel
12, Allée des Saules
F-38240 Meylan (FR)**
Inventeur : **Fruchart, Daniel
11, Allée Sully
F-38130 Echirolles (FR)**
Inventeur : **Chaudouet, Patrick
6, rue Marbeuf
F-38100 Grenoble (FR)**

(74) Mandataire : **Portal, Gérard et al
Cabinet Beau de Loménie
158, rue de l'Université
F-75340 Paris Cédex 07 (FR)**



Jouve, 18, rue Saint-Denis, 75001 PARIS

## Description

La présente invention concerne le secteur technique des produits doués de propriétés magnétiques permanentes.

Plus particulièrement, l'invention concerne des produits du type terre rare/fer/bore hydrurés et l'obtention des produits pulvérulents résultant du cycle d'hydruration/déshydruration correspondante.

Un point intéressant sur les aimants permanents comportant un élément des terres rares, et sur les recherches actuelles en ce domaine, a été présenté dans l'article de Arthur L.Robinson, Science, Vol.223, 2 mars 1984, pages 920-922, intitulé « Powerful New Magnet Material Found ».

L'article en question décrit entre autres un produit magnétique de formule $Nd_2\ Fe_{14}\ B$ ainsi que sa structure cristalline présumée, et ses propriétés magnétiques.

Ce produit présente toutefois une température de Curie relativement basse (585 K).

Il a maintenant été découvert selon l'invention un cycle d'hydruration-déshydruration de composés terre rare/fer/bore et terre rare/cobalt/bore qui conduit à des hydrures originaux doués de propriétés magnétiques remarquables, répondant à la formule:

$$R_2Fe_{14}\ BH_x$$

ou

$$R_2Co_{14}\ BH_x$$

avec $o<x\leqq 5$ de préférence $x\leqq 0,1$

où R représente un élément des terres rares ou l'yttrium et/ou, dans la formule ci-dessus, le fer ou le cobalt peut être substitué partiellement par d'autres éléments de transition 3d, 4d, 5d ou des éléments Al, C, Si, Ge.

Ces composés présentent en effet un moment magnétique nettement supérieur à celui des composés non hydrurés respectifs.

L'invention a donc également pour objet l'application faisant appel à leurs propriétés magnétiques des composés précités. Ces composés révèlent particulièrement intéressants sous forme de poudre fine pour, en particulier la préparation de supports d'enregistrement et de lecture magnétique, de ferrofluides et l'incorporation dans des masses élastomères ou plastiques et analogues.

L'invention a également pour objet un procédé de préparation des composés précités consistant à hydrurer les composés terre rare/fer/bore ou terre rare/cobalt/bore à la température ambiante et sous une pression d'hydrogène appropriée. La pression d'hydrogène est adapté selon le composé et le degré d'hydruration souhaité. Par exemple une pression supérieure à 10 bars ($10\times10^5$Pa) et inférieure à 500 bars ($500\times10^5$Pa) s'est révélée satisfaisante.

Les composés peuvent être déshydrurés par chauffage à une température comprise de préférence entre 150 et 600 °C. Il faut faire toutefois attention à ne pas atteindre la température de décomposition desdits composés. Ainsi les composés intermédiaires où $0<\times<5$ sont obtenus après mélange d'un composé non hydruré avec un composé d'hydruration $\times=5$ dans les proportions désirées puis ce mélange est porté à la température de déshydruration adaptée dans une enceinte étanche présentant un volume mort aussi réduit que possible et capable de tenir la pression. La déshydruration est de préférence effectuée sous vide.

Après refroidissement on obtient un hydrure homogène caractérisé par un spectre de raies fines et dont le point de Curie et les paramètres cristallins se situent entre les valeurs extrêmes caractéristiques du produit d'une part et du produit hydruré d'autre part.

Le procédé d'hydruration-déshydruration permet également d'obtenir un produit déshydruré remarquable se présentant sous l'aspect d'une poudre fine. Il faut souligner que l'obtention d'un tel produit n'était pas possible auparavant et l'ont connaît l'importance de cette finesse dans les applications précitées. En général ces produits présentent en combinaison avec un broyage une granulométrie comprise entre 0,2 et 3 $\mu$m et de préférence entre 0,8 et 1,5 $\mu$m.

L'invention concerne également de nouveaux composés non hydrurés de granulométrie comprise entre 0,5 et 3 $\mu$m. De préférence les composés ont un degré d'hydruration $\times\geqq 3$ car ils possèdent des moments magnétiques excellents pour les applications envisagées.

Parmi les composés préférés on peut citer les composés de formule $Nd_2\ Fe_{14}\ BH_x$ avec $0<\times\leqq 5$. Ce nouvel hydrure est préparé par hydruration du composé $Nd_2\ Fe_{14}\ B$. L'hydruration est effectuée à température ambiante et sous une pression d'hydrogène d'environ 20 bars ($20\times10^5$ Pa), par exemple.

On obtient par ce procédé un composé répondant à la formule $Nd_2\ Fe_{14}\ BH_5$ caractérisé par une maille cristalline quadratique de paramètres

a = 0,8926 nm

b = 1,2334 nm

et dont le point de Curie se situe à 403 °C, $\theta_c$ = 403 °C, Le produit de départ de formule $Nd_2\ Fe_{14}\ B$ est lui-

même obtenu par un procédé similaire à celui décrit par SAGAWA dans la demande de brevet européen 0101552, à la suite de fusion en creuset de lévitation et recuits. Compte tenu de la fusion non congruente du composé $Nd_2$ $Fe_{14}$ B un enrichissement en néodyme par rapport à la composition stoechiométrique permet d'éviter par abaissement de la température d'équilibre liquidussolidus la précipitation primaire de fer au cours de la solidification. On utilisera pour cette raison un mélange répondant à la composition globale $Nd_2$ $Fe_{10,5}$ B. Le matériau ainsi obtenu est composé en forte proportion de la phase $Nd_2$ $Fe_{14}$ B de paramètres:

a = 0,8805 nm

symétrie quadrique $\theta_c$ = 316°C,

c = 1,2204 nm

Les moments magnétiques exprimés un uemcgs (A·m²/kg) sont respectivement

1) $Nd_2$ $Fe_{14}$ B obtenu à partir de la composition initiale
« $Nd_2$ $Fe_{10,5}$ B » de paramètres
a = 0,8805 nm
c = 1,2204 nm
H = 2,66 Tesla (300K) M = 129,2 uemcgs (A·m²/ kg)
H = 15,8 Tesla (4,2K) M = 164,6 uemcgs (A·m²/ kg)
H = 15,8 Tesla (300K) M = 144,3 uemcgs (A·m²/ kg)

2) le composé précédent hydruré de paramètres
a = 0,8926 nm
c = 1,2334 nm
H = 2,66 Tesla (300K) M = 150,8 uemcgs (A.m²/ kg)
H = 15,8 Tesla (4,2K) M = 169,4 uemcgs (A.m²/ kg)
H = 15,8 Tesla (300K) M = 152,4 uemcgs (A·m²/ kg)

Soulignons qu'il n'était absolument pas évident qu'un produit aussi riche en fer puisse s'hydrurer.

On pouvait également craindre que l'hydruration n'affecte (ou ne décompose) la phase $Nd_2$ $Fe_{14}$ B, et donc les propriétés magnétiques.

En fait, on a constaté qu'il n'en est rien et que, au contraire, l'absorption d'hydrogène se traduit par une augmentation du moment magnétique à température ambiante et une diminution du champ magnétique nécessaire à la saturation, par rapport au composé de départ $Nd_2$ $Fe_{14}$ B, et une augmentation du point de Curie.

Cette évolution des propriétés est représentée sur la fig. 1 annexée.

Le moment magnétique mesuré de 0 à 2,66 Tesla est exprimé en $\mu_B$ par groupement formulaire.

La fig. 2 annexée représente la courbe d'aimantation, aux différentes températures indiquées sur le graphe, d'une poudre de $Nd_2$ $Fe_{14}$ B $H_5$ orientée perpendiculairement au champ et bloquée sous liant araldite.

Sur ce graphe les températures sont exprimées en degrés K et les champs magnétiques en tesla.

Ce graphe montre que le champ d'anisotropie est très fort à basse température. Il décroît avec l'augmentation de la température.

Les résultats de l'étude magnétique sont confirmés par spectroscopie Mössbauer qui a permis de mettre en évidence une augmentation des champs hyperfins sur les sites de Fe à température ambiante par rapport à ceux mesurés pour $Nd_2$ $Fe_{14}$ B.

Sur les quatre sites de Fe distingués par effet Mössbauer, le champ hyperfin moyen pondéré passe de 305 KOe (30,5 Tesla) pour $Nd_2Fe_{14}$ B à 320 KOe (32 Tesla) pour l'hydrure selon l'invention $Nd_2Fe_{14}B$ $H_x$.

Il est à noter que l'hydruration décrite ci-dessus est réversible, sans destruction de la phase $Nd_2$ $Fe_{14}$ B, et que le cycle d'hydruration-déshydruration appliqué au composé $Nd_2$ $Fe_{14}$ B permet de préparer ce composé $Nd_2$ $Fe_{14}$ B sous une forme pulvérulente.

A la pression atmosphérique l'hydrure commence à perdre son hydrogène vers 150 °C. Cependant, des températures de l'ordre de 400 °C environ sont nécessaires pour éliminer totalement l'hydrogène sous vide primaire ($10^{-2}$ mm Hg = 1,3 Pa) et revenir au composé de départ $Nd_2$ $Fe_{14}$ B.

La fusion non congruente de certains composés $R_2$ $Fe_{14}$ B, en particulier $Nd_2$ $Fe_{14}$ B, ne permet pas d'obtenir un produit pur par fusion et solidification du mélange des éléments en proportions stoechiométriques. Le matériau obtenu est un mélange comprenant en forte majorité la phase $Nd_2$ $Fe_{14}$ B, du fer et un composé beaucoup plus riche en néodyme (non magnétique).

Le mélange précédent sous forme massive soumis à un traitement d'hydruration/déshydruration, du fait qu'il est réduit en poudre fine, devient beaucoup plus réactif. Un traitement de diffusion vers 900 °C du produit pulvérulent précédent permet de combiner le fer issu de la précipitation primaire et d'obtenir ainsi un matériau beaucoup plus pur.

La propriété de former des hydrures ferromagnétiques s'étend à tous les composés isomorphes du composé quadratique $Nd_2$ $Fe_{14}$ B y compris leurs solutions solides obtenues soit par substitution des terres rares entre elles soit par substitution partielle d'éléments de transition 3d ou 4d ou 5d au fer et au cobalt, et de divers

éléments entrant classiquement en substitution avec le fer comme Al, Si, Ge.

Cette substitution au fer est totale dans le cas du cobalt conduisant par exemple au composé

$Nd_2\ Co_{14}\ B\ \theta_c = 708\ °C$ a = 0,86492 nm
c = 1,18558 nm

dont l'hydruration peut conduire à la formule

$Nd_2\ Co_{14}\ B\ H_3$ ferromagnétique a = 0,8705 nm
c = 1,1925 nm

Les tableaux I et II ci-après rassemblent les paramètres cristallins de quelques composés préférés selon l'invention, hydrurés à la température ambiante sous pression d'hydrogène de l'ordre de 50 bars ($50.10^5$ Pa) et les composés non hydrurés correspondants.

Exemples complémentaires:

Par les méthodes ci-dessus, on a réalisé les produits suivants:

1) $Tb_2\ Co_{14}$ BH
% en poids d'hydrogène fixé: 0,37%
2) $La_2\ Co_{14}$ BH
% en poids d'hydrogène fixé: 0,20%
3) $Pr_2\ Co_{14}$ BH
% en poids d'hydrogène fixé: 0,15%
4) $Gd_2\ Co_{14}$ BH
% en poids d'hydrogène fixé: 0,15%
5) $Y_2\ Co_9\ Mn_5$ BH
% en poids d'hydrogène fixé: 0,33% produit non hydruré ($Y_2\ Co_9\ Mn_5$ B):
a = 0,8697 nm
c = 1,1969 nm

**Tableau I**

| Ln | $Ln_2\ Fe_{14}$ B | | | $Ln_2\ Fe_{14}\ BH_x$ | | | H % pondéral | x |
|---|---|---|---|---|---|---|---|---|
| | nm | nm | $nm^3$ | nm | nm | $nm^3$ | | |
| Ce | a: 0,8757 | c: 1,2106 | v: 0,928351 | a: 0,8921 | c: 1,2275 | v: 0,977046 | 0,45 | 4,83 |
| Pr | 0,8810 | 1,2246 | 0,950542 | 0,8923 | 1,2370 | 0,985761 | 0,32 | 3,44 |
| Nd | 0,8805 | 1,2204 | 0,946189 | 0,8926 | 1,2344 | 0,983489 | 0,47 | 5,08 |
| Sm | 0,8791 | 1,2135 | 0,937940 | 0,8919 | 1,2263 | 0,975597 | 0,37 | 4,05 |
| Gd | 0,8789 | 1,2077 | 0,932892 | 0,8891 | 1,2201 | 0,964410 | 0,29 | 3,22 |
| Tb | 0,8767 | 1,2040 | 0,925471 | 0,8879 | 1,2168 | 0,959398 | 0,32 | 3,56 |
| Dy | 0,8759 | 1,2011 | 0,921621 | 0,8866 | 1,2139 | 0,954176 | 0,32 | 3,58 |
| Ho | 0,8745 | 1,1977 | 0,915715 | 0,8853 | 1,2114 | 0,949397 | 0,39 | 4,39 |
| Er | 0,8734 | 1,1956 | 0,912059 | 0,8844 | 1,2088 | 0,945570 | 0,30 | 3,39 |
| Tm | 0,8722 | 1,1931 | 0,907715 | 0,8840 | 1,2061 | 0,942423 | 0,30 | 3,39 |
| Y | 0,8755 | 1,2018 | 0,921256 | 0,8880 | 1,2156 | 0,958534 | 0,38 | 3,7 |

**Tableau II**

| Ln | $Ln_2\ Co_{14}$ B | | | $Ln_2\ Co_{14}\ BH_x$ | | | H % pondéral | x |
|---|---|---|---|---|---|---|---|---|
| | nm | nm | $nm^3$ | nm | nm | $nm^3$ | | |
| La | a: 0,8687 | c: 1,1012 | v: 0,906573 | a: 0,8752 | c: 1,2087 | v: 0,925786 | 0,20 | 2,14 |
| Pr | 0,8655 | 1,1886 | 0,890383 | 0,8712 | 1,1965 | 0,908237 | 0,14 | 1,5 |
| Nd | 0,8649 | 1,1856 | 0,886916 | 0,8705 | 1,1925 | 0,903602 | 0,27 | 2,9 |
| Sm | 0,8629 | 1,1806 | 0,879220 | 0,8678 | 1,1878 | 0,894649 | 0,16 | 1,75 |
| Gd | 0,8618 | 1,1764 | 0,873813 | 0,8655 | 1,1809 | 0,884656 | 0,15 | 1,77 |
| Tb | 0,8605 | 1,1728 | 0,868511 | 0,8637 | 1,1764 | 0,877631 | 0,37 | 4,1 |
| Y | 0,8604 | 1,1718 | 0,867532 | 0,8635 | 1,1758 | 0,876772 | 0,42 | 4,25 |

On a représenté sur la fig. 3 les courbes d'aimantation à 293 K des composés $Ce_2\ Fe_{14}\ BH_{4,83}$ et $Ce_2\ Fe_{14}\ B$.

De même on a représenté à la fig. 4 les courbes d'aimantation à 293 K des composés $Y_2\ Fe_{14}\ BH_{3,7}$ et $Y_2\ Fe_{14}\ B$.

Dans ces deux cas on a constaté une valeur très élevée d'aimantation avec une anisotropie plus faible.

## Revendications

1. Nouveaux composés caractérisés en ce qu'ils consistent en hydrures de terre rare/fer/bore ou terre rare/cobalt/bore et répondent à la formule:

   $$R_2Fe_{14}\ B\ H_x$$

   ou

   $$R_2\ Co_{14}\ B\ H_x$$

   avec $0<x\leqq 5$
   où R représente un élément des terres rares ou l'yttrium, en ce que dans la formule ci-dessus le fer ou le cobalt peut être substitué partiellement par d'autres éléments de transition 3d, 4d, 5d ou des éléments Al, C, Si, Ge.

2. Nouveau composé selon la revendication 1, caractérisé en ce qu'il répond à la formule:

   $$Nd_2\ Fe_{14}\ B\ H_x$$

   ou

   $$Nd_2\ Co_{14}\ B\ H_x$$

   avec $0<x\leqq 5$,
   en particulier $Nd_2\ Fe_{14}\ B\ H_5$ ou $Nd_2\ Co_{14}\ B\ H_3$.

3. Procédé de préparation des composés selon la revendication 1 ou 2, caractérisé en ce qu'on effectue l'hydruration du composé terre rare/fer/ bore $R_2\ Fe_{14}\ B$ ou terre rare/cobalt/bore $R_2\ Co_{14}\ B$.

4. Procédé selon la revendication 3 de préparation du composé selon la revendication 2, caractérisé en ce qu'on hydrure le composé $Nd_2\ Fe_{14}\ B$ ou $Nd_2\ Co_{14}\ B$ à la température ambiante et sous une pression d'hydrogène au moins égale à $1.10^6$ Pa et inférieure à $500.10^5$ Pa.

5. Applications des hydrures selon la revendication 1 ou 2, faisant appel à leurs propriétés magnétiques, notamment sous forme de poudre fine, en particulier préparation de supports d'enregistrement et de lecture magnétiques, ferrofluides, incorporation dans des masses élastomères ou plastiques et analogue.

6. Procédé de déshydruration des nouveaux composés de formule $R_2\ Co_{14}\ B\ H_x$ ou $R_2\ Fe_{14}\ B\ H_x$ selon la revendication 1 ou 2, caractérisé en ce que l'on chauffe les composés à au moins 150 °C.

7. Procédé selon la revendication 6, caractérisé en ce que l'on réalise le chauffage sous vide.

8. Procédé de préparation de composés de formule $R_2Fe_{14}B$ ou $R_2Co_{14}B$ où R représente un élément des terres rares, notamment $Nd_2Fe_{14}B$ ou $Nd_2Co_{14}B$, caractérisé en ce qu'on procède à une déshydruration en chauffant les composés hydrurés de formule $R_2Fe_{14}BH_x$ ou $R_2Co_{14}BH_x$ avec $0 < x \leqq 5$ à au moins 150 °C, éventuellement en réalisant un chauffage sous vide, pour former lesdits composés de formule $R_2Fe_{14}B$ ou $R_2Co_{14}B$ sous forme d'une poudre fine de granulométrie comprise entre 0,2 et 3 µm.

9. Utilisation de la poudre fine précédemment obtenue par le procédé selon la revendication 8 pour la préparation de supports d'enregistrement et de lecture magnétique, de ferrofluides et de masses élastomères ou plastiques ayant des propriétés magnétiques.

## Patentansprüche

1. Neue Verbindungen,
   dadurch gekennzeichnet,
   daß sie aus Seltenerd-Eisen-Bor- oder Seltenerd-Kobalt-Bor-Hydriden bestehen und der Formel:

   $$R_2Fe_{14}\ B\ H_x$$

oder

$$R_2Co_{14}\ B\ H_x$$

mit $0<x\leqq5$ entsprechen, worin R ein Element der Seltenen Erden oder Yttrium bedeutet, und daß in der obigen Formel Eisen oder Kobalt teilweise durch andere 3d-, 4d-, 5d-Obergangselemente oder die Elemente Al, C, Si, Ge ersetzt sein kann.

2. Neue Verbindung nach Anspruch 1, dadurch gekennzeichnet, daß sie der Formel:

$$Nd_2\ Fe_{14}\ B\ H_x$$

oder

$$Nd_2\ Co_{14}\ B\ H_x$$

mit $0<x\leqq5$, insbesondere

$$Nd_2\ Fe_{14}\ B\ H_5$$

oder

$$Nd_2\ Co_{14}\ B\ H_3$$

entspricht.

3. Verfahren zur Herstellung der Verbindungen nach dem Anspruch 1 oder 2, dadurch gekennzeichnet, daß man die Hydrierung der Seltenerd-Eisen-Bor-Verbindung $R_2Fe_{14}B$ oder der Seltenerd-Kobalt-Bor-Verbindung $R_2Co_{14}B$ durchführt.

4. Verfahren nach dem Anspruch 3 zur Herstellung der Verbindung nach dem Anspruch 2, dadurch gekennzeichnet, daß man die Verbindung $Nd_2Fe_{14}B$ oder $Nd_2Co_{14}B$ bei Raumtemperatur und unter einem Wasserstoffdruck von wenigstens gleich $10^6$ Pa und unter $500 \cdot 10^5$ Pa hydriert.

5. Verwendungen der Hydride nach dem Anspruch 1 oder 2 unter Ausnutzung ihrer magnetischen Eigenschaften, insbesondere in Form von feinem Pulver, besonders Herstellung von Magnetaufzeichnungs- und -ableseträgern, Ferrofluiden, Zusatz in elastomere oder plastische und analoge Massen.

6. Verfahren zur Dehydrierung der neuen Verbindungen der Formel $R_2Co_{14}BH_x$ oder $R_2Fe_{14}BH_x$ nach dem Anspruch 1 oder 2, dadurch gekennzeichnet, daß man die Verbindungen auf wenigstens 150°C erhitzt.

7. Verfahren nach dem Anspruch 6, dadurch gekennzeichnet, daß man die Erhitzung unter Vakuum durchführt.

8. Verfahren zur Herstellung der Verbindungen der Formel $R_2Fe_{14}B$ oder $R_2Co_{14}B$, worin R ein Element der Seltenen Erden bedeutet, besonders $Nd_2Fe_{14}B$ oder $Nd_2Co_{14}B$, dadurch gekennzeichnet, dass Man eine Dehydrierung der Hydride $R_2Fe_{14}BH_x$ oder $R_2Co_{14}BH_x$, mit $0 < x \leqq 5$ durch Erhitzung auf wenigstens 150 °C, gegebenenfalls durch Erhitzung unter Vakuum, durchführt, zum Erhalten der Verbindungen der Formel $R_2Fe_{14}B$ oder $R_2Co_{14}B$ in der Form eines feinen Pulvers mit einer Korngrösse von 0,2 bis 3 µm.

9. Verwendungen des feinen Pulvers erhalten nach dem Verfahren nach dem Anspruch 8, zur Herstellung von Magnetaufzeichnungs- und -ableseträgern, Ferrofluiden, und elastomeren oder plastischen Massen mit magnetischen Eigenschaften.

## Claims

1. Novel compounds characterized in that they consist in rare-earth/iron/boron or rare-earth/cobalt/boron hy-

drides, of the formula:

$$R_2Fe_{14}B\ H_x$$

or

$$R_2\ Co_{14}\ B\ H_x$$

with $0<x\leqq5$
where R represents an element of the rare earth or yttrium, in that in the above formula, the iron or cobalt can be partially substituted by other transition elements 3d, 4d, 5d or the elements Al, C, Si,Ge.

2. Novel compound according to claim 1, characterized in that it has the formula:

$$Nd_2\ Fe_{14}\ B\ H_x$$

or

$$Nd_2\ Co_{14}\ B\ H_x$$

with $0<x\leqq5$
in particular

$$Nd_2\ Fe_{14}\ B\ H_5$$

or

$$Nd_2\ Co_{14}\ B\ H_3.$$

3. Process for preparing the compounds according to claims 1 or 2, characterized in that the hydridation of the rare earth/iron/boron $R_2\ Fe_{14}\ B$ or rareearth/cobalt/boron $R_2\ Co_{14}\ B$ compound is carried out.

4. Process according to claim 3 for preparing the compound according to claim 2, characterized in that compound $Nd_2\ Fe_{14}\ B$ or $Nd_2\ Co_{14}\ B$ is hydrided at room temperature and under a hydrogen pressure at least equal to $1.10^6$ Pa and lower than $500.10^5$ Pa.

5. Applications of the hydrides according to claim 1 or 2 using their magnetic properties, particularly in the form of fine powder, such as the preparation of recording and reading magnetic carriers, ferrofluids, incorporation in elastomer or plastic masses and the like.

6. Process for dehydriding novel compounds of formula $R_2\ Co_{14}\ B\ H_x$ or $R_2\ Fe_{14}\ B\ H_x$ according to claim 1 or 2, characterized in that the compounds are heated to at least 150°C.

7. Process according to claim 6, characterized in that the heating is carried out in vacuum.

8. Process for preparing the compounds of formula $R_2\ Fe_{14}\ B$ or $R_2\ Co_{14}\ B$ where R represents an element of the rare earths, in particular $Nd_2\ Fe_{14}\ B$ or $Nd_2\ Co_{14}\ B$, characterized in that a dehydration is conducted by heating the hydrided compounds of formula $R_2\ Fe_{14}\ B\ H_x$ or $R_2\ Co_{14}\ B\ H_x$ with $0<x\leqq5$, to at least 150°C, optionally by way of a heating in vacuum, in order to form said compounds of formula $R_2\ Fe_{14}\ B$ or $R_2\ Co_{14}\ B$ in the form of a fine powder of granulometry comprised between 0.2 and 3 μm.

9. Use of the previously obtained fine powder for preparing, recording and reading magnetic carriers, ferrofluids, elastomer or plastic masses having magnetic properties.

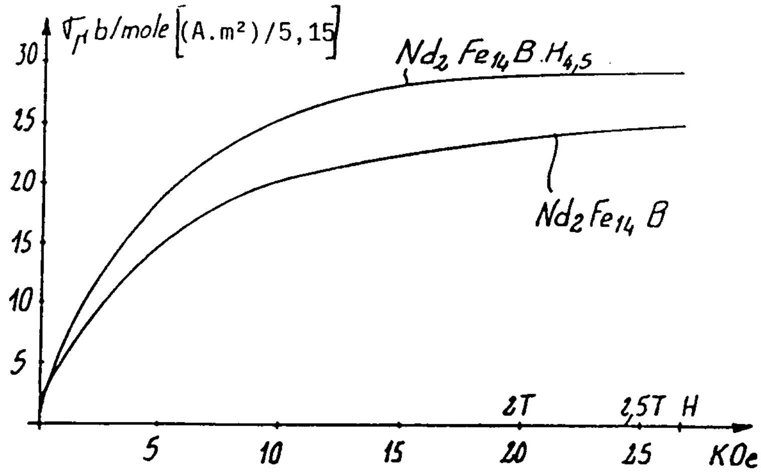
b/mole [(A.m²)/5,15]
$Nd_2 Fe_{14} B H_{4,5}$
$Nd_2 Fe_{14} B$
30
25
20
15
10
5
2T
2,5T H
5
10
15
20
25
KOe

Fig. 1

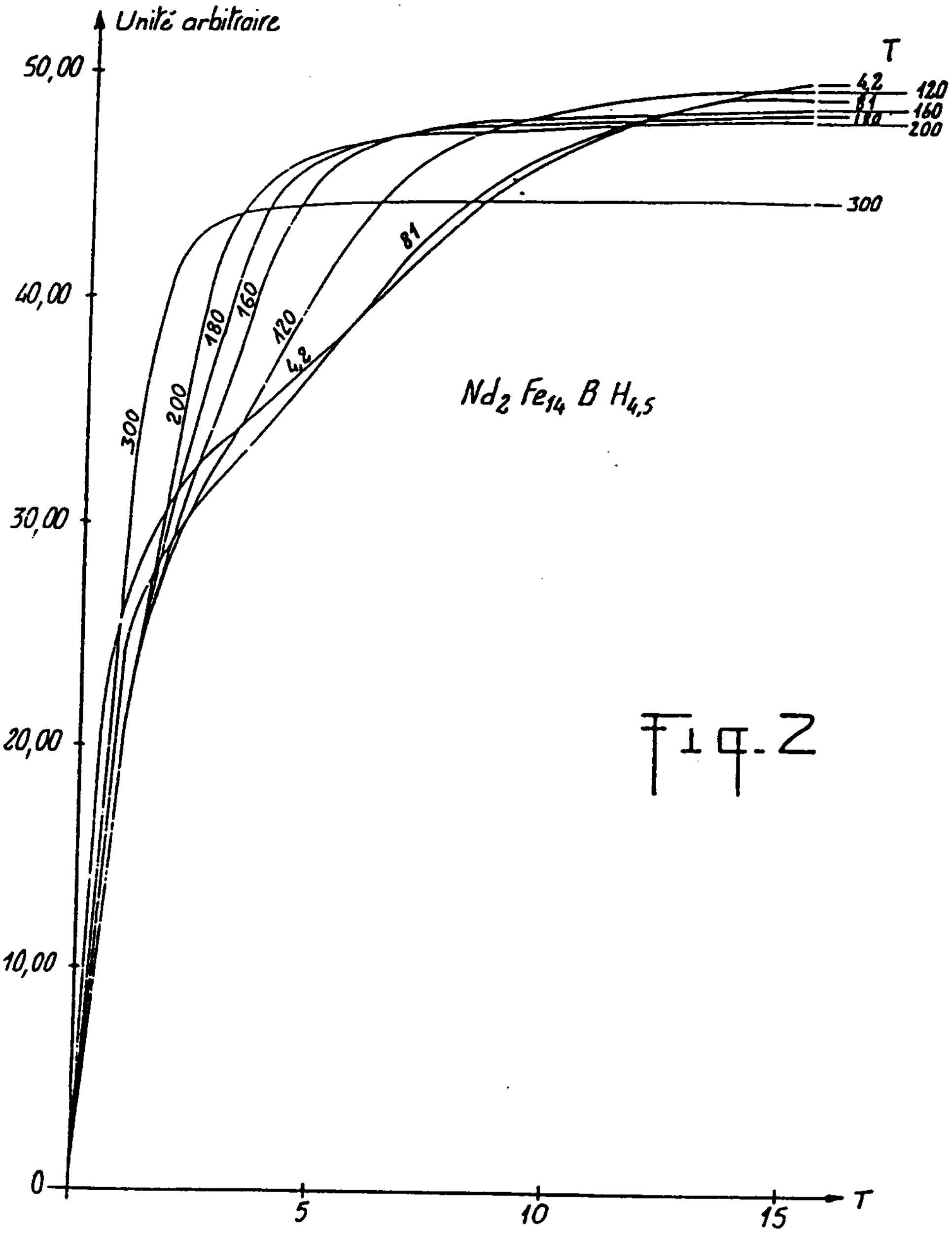
Unité arbitraire
50,00
40,00
30,00
20,00
10,00
0
T
4,2
120
81
160
180
200
300
$Nd_2 Fe_{14} B H_{4,5}$
5
10
15
T

Fig. 2

Fig.3

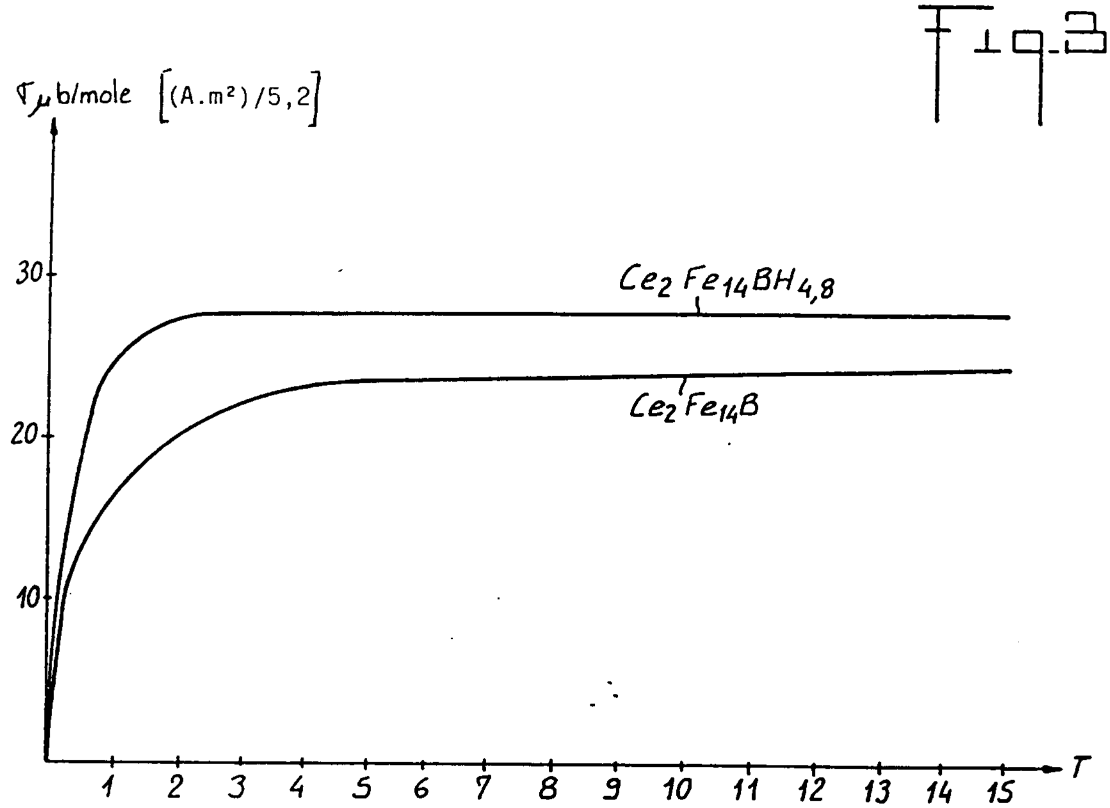

σμb/mole [(A.m²)/5,2]
30
20
10
Ce2 Fe14BH4,8
Ce2 Fe14B
1 2 3 4 5 6 7 8 9 10 11 12 13 14 15
T


Fig.4

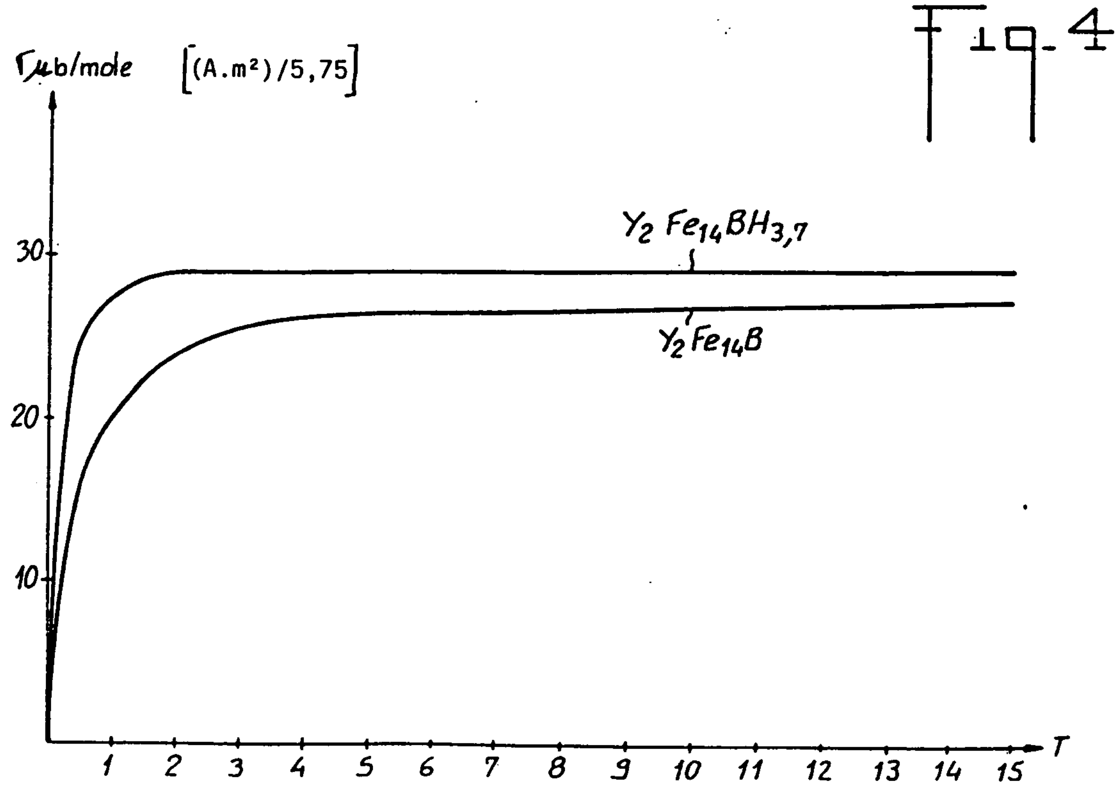

σμb/mole [(A.m²)/5,75]
30
20
10
Y2 Fe14BH3,7
Y2 Fe14B
1 2 3 4 5 6 7 8 9 10 11 12 13 14 15
T